# EUROPÄISCHE PATENTSCHRIFT

(11) **EP 3 487 742 B1**
(45) Veröffentlichungstag und Bekanntmachung des Hinweises auf die Patenterteilung: **20.05.2020**
(21) Anmeldenummer: 17767817.4
(22) Anmeldetag: 13.09.2017
(51) Int. Cl.: B61D 35/00

(54) **GRAUWASSERAUFBEREITUNGSVORRICHTUNG FÜR EIN SCHIENENFAHRZEUG**
GREYWATER TREATMENT DEVICE FOR A RAIL VEHICLE
DISPOSITIF DE TRAITEMENT D'EAUX GRISES POUR VÉHICULE FERROVIAIRE

(30) Priorität: 20.09.2016 DE 102016217998
(43) Veröffentlichungstag der Anmeldung: 29.05.2019
(73) Patentinhaber: Siemens Mobility GmbH, 81739 München (DE)
(72) Erfinder: KEMMERLING, Frank, 41472 Neuss (DE)
(86) Internationale Anmeldenummer: PCT/EP2017/072997
(87) Internationale Veröffentlichungsnummer: WO 2018/054737

(56) Entgegenhaltungen:
- DE-B3-102013 205 084
- US-A- 4 521 925
- US-A- 5 891 330
- US-A1- 2014 097 138

## Beschreibung

Die Erfindung betrifft eine Aufbereitungsvorrichtung für Grauwasser für ein Schienenfahrzeug, mit einem Grauwasserbehälter, einem Grauwasserzulauf, einem Ablauf für gefiltertes Grauwasser, einem Filter zwischen dem Grauwasserzulauf und dem Ablauf für gefiltertes Grauwasser und einem Füllstandsensor.

Eine derartige Grauwasseraufbereitungsvorrichtung ist aus der DE 10 2013 205 084 B3 bekannt. Diese ist zur Benutzung in einem Sanitärbereich des Schienenfahrzeugs vorgesehen. Das Grauwasser aus einem Handwaschbecken kann nun nicht mehr nur auf das Gleis abgeleitet oder einem Abwassertank zugeführt werden, sondern es kann aufgefangen, aufbereitet und einem WC-Modul als Spülwasser zur Verfügung gestellt werden.

Das Dokument US 4 521 925 A lehrt eine Sanitäranlage eines Schienenfahrzeugs. Die Druckschriften US 5 891 330 A und US 2014/097138 A1 offenbaren gattungsgemäße Aufbereitungsvorrichtungen für Abwasser.
Das in einer Galley anfallende Grauwasser enthält dagegen oft Speisereste und gelöste Fette und kann daher nicht direkt auf die Gleise abgeleitet werden. Es wird deshalb üblicherweise in einem Grau- oder Abwasserbehälter gesammelt. Der Grau- oder Abwasserbehälter wird zyklisch, beispielsweise alle 3 Tage abgesaugt, das gesamte Wasser verbleibt bis dahin im Grau- oder Abwasserbehälter. Zum Absaugen werden besondere Absaugvorrichtungen benötigt.

Der Erfindung liegt die Aufgabe zugrunde, eine kostengünstig zu betreibende Aufbereitungsvorrichtung für Grauwasser einer Galley vorzuschlagen.

Gelöst wird die Aufgabe durch die Gegenstände der unabhängigen Patentansprüche 1 und 15. Weiterbildungen und Ausgestaltungen der Erfindung finden sich in den Merkmalen der abhängigen Patentansprüche wieder.

Ein erfindungsgemäßes Schienenfahrzeug umfasst wenigstens eine erfindungsgemäße Aufbereitungsvorrichtung. Eine erfindungsgemäße Aufbereitungsvorrichtung für Grauwasser für ein Schienenfahrzeug umfasst ihrerseits einen Grauwasserbehälter mit wenigstens einem Grauwasserzulauf, insbesondere in einem Einlassbereich des Grauwasserbehälters, wenigstens einem Ablauf für gefiltertes Grauwasser, insbesondere in einem Auslassbereich des Grauwasserbehälters, wenigstens einem Filter zwischen dem Grauwasserzulauf und dem Ablauf für gefiltertes Grauwasser, insbesondere zwischen dem Ein- und dem Auslassbereich, und einem Füllstandsensor, welcher insbesondere im Einlassbereich des Grauwasserbehälters angeordnet ist. Der Füllstandsensor ist erfindungsgemäß zur Erkennung eines Grenzstands an Feststoff im Grauwasserbehälter, insbesondere zumindest im Einlassbereich des Grauwasserbehälters, geeignet ausgebildet. Er kann auch ausgebildet sein, einen Füllstand an Feststoff im Grauwasserbehälter, insbesondere zumindest im Einlassbereich des Grauwasserbehälters, zu erkennen.

Fürderhin kann der Füllstandsensor geeignet ausgebildet und im Grauwasserbehälter angeordnet sein, einen Grenz- oder Füllstand an Grauwasser im Grauwasserbehälter, insbesondere im Einlassbereich des Grauwasserbehälters, zu erkennen.

Darüber hinaus kann er ausgebildet sein, ein Signal in Abhängigkeit des erkannten Grenz- oder Füllstands zu erzeugen an eine Fahrzeugsteuerung des Schienenfahrzeugs auszugeben. So wird insbesondere das Erreichen des vorgegebenen Grenzstands an die Fahrzeugsteuerung signalisiert.

Beispielsweise ist der Füllstandsensor als kapazitiver Frequenzhub-Füllstandsensor oder als Vibrationssensor ausgebildet.

Allgemein wird bei einer Füllstandmessung mit einem Füllstandsensor der Füllstand von Flüssigkeiten und Schüttgütern in einem Behälter erfasst. Unterschieden wird zwischen einer kontinuierlichen Messung des Füllstands und einer Detektion des Erreichens eines Grenzstands.

Bei einer kontinuierlichen Messung des Füllstandes werden entsprechend der erreichten Standhöhe Messwerte ausgegeben.

Erzeugt der Füllstandsensor beim Erkennen eines Grenzstands ein bloßes Schaltsignal, beispielsweise über Relaisausgänge, kann er auch als Grenzstandschalter bezeichnet werden. Wird ein solcher Grenzstandschalter in eine Seitenwand eines Behälters eingebaut, so spiegelt seine Position einen vorher festgelegten Grenzstand wieder.

Vibrationssensoren sind in Form von Stimmgabeln bekannt geworden, die auf ihrer Resonanzfrequenz zum Vibrieren angeregt werden. Durch das Eintauchen in ein Medium verändert sich die Schwingfrequenz bzw. die Amplitude. Diese Änderung wird ausgewertet und in ein (Schalt-) Signal umgesetzt. Sie sind geeignet zur Verwendung in Schüttgütern und Flüssigkeiten, auch bei Ansatzbildung, Turbulenzen oder Luftblasen, unabhängig von den elektrischen Eigenschaften des Mediums. Mit Vibrationssensoren lassen sich Feststoffe in Flüssigkeiten und gar Feststoffanteile in Flüssigkeiten ermitteln. Inzwischen ist sogar eine Dichtemessung möglich.

Bei der kapazitiven Füllstandmessung wird die Änderung der elektrischen Kapazität zwischen Elektroden des kapazitiven Füllstandsensors detektiert, wenn diese von einem Medium umgeben werden. Diese Änderung hängt von der Dielektrizitätskonstante des Mediums ab. Ist diese konstant, so kann aus der gemessenen Kapazität darauf geschlossen werden, wie weit die Elektroden in das Medium eintauchen. Grundsätzlich sind kapazitive Füllstandsensoren somit geeignet zur kontinuierlichen Füllstandmessung.

Kapazitive Füllstandsensoren müssen nicht zwingend in unmittelbarem Kontakt mit dem Medium sein, sie können es auch durch Behälterwände detektieren, in Abhängigkeit vom Verhältnis der Dielektrizitätskonstante des Mediums zur Dielektrizitätskonstante der Behälterwandung. Der Füllstandsensor muss somit nicht zwingend im Grauwasserbehälter, beispielsweise im Einlassbereich des Grauwasserbehälters angeordnet sein. Er kann auch am Grauwasserbehälter, insbesondere außerhalb des Grauwasserbehälters an einer Wand des Grauwasserbehälters angeordnet sein.

Mittels kapazitiver Füllstandsensoren, beispielsweise mit kapazitiven Frequenzhub-Füllstandsensoren, kann jedoch auch die Änderung der Dielektrizitätskonstante detektiert werden und diese Änderung beispielsweise in ein Schaltsignal umgesetzt werden. Auch diese Sensoren sind unempfindlich gegen Anhaftungen an der Sensorspitze, Schäume oder vorbeifließendem Medium.

Die Aufbereitungsvorrichtung ist geeignet ausgebildet zum Einsatz in einer Galley eines Schienenfahrzeugs. Als Galley wird üblicherweise der Bordküchenbereich eines Fahrzeugs bezeichnet. Die Aufbereitungsvorrichtung ist beispielsweise unterhalb einer Spüle, eines Waschbeckens und/oder einer Spülmaschine oder im Unterflurbereich angeordnet.

Insbesondere durch Sedimentation werden die Feststoffe von der flüssigen Phase getrennt und setzten sich als Sediment am Boden ab. Je nach Art der Filterung wird die Ablagerung der herausgefilterten Feststoffpartikel auch als Filterkuchen bezeichnet. Das aufbereitete, gefilterte Grauwasser ist vom Sediment bzw. von den Feststoffpartikeln einer vorgegebenen Mindestgröße befreit. Das zurückbleibende, abgelagerte Sediment kann natürlich noch einen gewissen Anteil an Flüssigkeit umfassen. Daher ist der Füllstandsensor gemäß einer Weiterbildung der Erfindung geeignet ausgebildet, zumindest den Grenzstand an Grauwasser mit einer vorgegebenen Feststoffbeladung im Grauwasserbehälter, insbesondere im Einlassbereich des Grauwasserbehälters, zu erkennen. Der Grad an Feststoffbeladung des Grauwassers bzw. die Konzentration an Feststoff im Grauwasser soll insbesondere 80 % nicht übersteigen, um bei Erreichen des vorgegebenen Grenzstands, diesen als Grenzstand an Feststoff zu erkennen.

Durch die Filterung und Sammlung von Feststoff im Grauwasserbehälter kann das Absaug- bzw. Reinigungsintervall des Grauwasserbehälters signifikant verlängert werden. Das gefilterte Grauwasser kann auf das Gleisbett abgelassen werden. Dadurch wird weniger Volumen im Grauwasserbehälter zurückgehalten.

Um festzustellen wann eine Entleerung des Grauwasserbehälters erforderlich ist, wird der Füllstand der Feststoffe überwacht.

Gemäß einer weiteren Weiterbildung der Erfindung ist der Grenzstand an Feststoff dabei so bemessen, dass der Grauwasserbehälter eine vorgegebene Reserve für zusätzlichen Feststoff umfasst. Hierzu kann der Füllstandsensor so platziert sein, dass eine Tagesreserve für weiteres Feststoffvolumen vorhanden ist. Die Tagesreserve ergibt sich beispielsweise aus der durchschnittlichen Zufuhr von Feststoff an einem üblichen Betriebstag. Die Reserve dient insbesondere der Vorbeugung vor Verstopfung oder Zusetzung des Filters. Der Füllstandsensor ist somit so angeordnet, dass er den Grenzstand an Feststoff bereits erkennt und gegebenenfalls anzeigt, insbesondere ein Signal in Abhängigkeit des detektierten Grenzstands an Feststoffs ausgibt, wenn noch zusätzlich so viel Feststoff zuführbar ist, wie an wenigstens einem Tag durchschnittlicher Zufuhr.

Das Signal würde einen vollen, sedimentbeladenen Grauwasserbehälter repräsentieren. Es wird insbesondere an eine Fahrzeugsteuerung des Schienenfahrzeugs ausgegeben. Allgemein kann der Füllstandsensor ausgebildet sein, ein Signal in Abhängigkeit zumindest des Grenzstands an Feststoff im Grauwasserbehälter, insbesondere in Abhängigkeit des Füllstands an Feststoff im Einlassbereichs des Grauwasserbehälters, zu erzeugen und an eine Fahrzeugsteuerung des Schienenfahrzeugs auszugeben. Die Fahrzeugsteuerung kann ihrerseits ausgebildet sein, ein Signal an eine landseitige Einrichtung in Abhängigkeit zumindest des Grenzstands an Feststoff im Grauwasserbehälter, insbesondere in Abhängigkeit des Füllstands an Feststoff im Einlassbereich des Grauwasserbehälters, zu erzeugen und auszugeben. Das Signal der Fahrzeugsteuerung kann dabei, insbesondere zur Planung einer Entleerung des Grauwasserbehälters, beispielsweise via eine DFÜ-Meldung, an eine landseitige Einrichtung wie eine Werkstatt oder ein Depot übermittelt werden.

Betrieben wird eine erfindungsgemäße Aufbereitungsvorrichtung dadurch, dass zunächst zumindest das Erreichen eines Grenzstands an Feststoff im Grauwasserbehälter durch den Füllstandsensor erkannt wird und anschließend ein Signal an eine landseitige Einrichtung in Abhängigkeit des erkannten Grenzstands an Feststoff im Grauwasserbehälter übermittelt wird.

Ein Vorteil der Erfindung liegt daher in der bedarfsgerechten Absaugung. Es werden keine halbvollen Tanks mehr abgesaugt. Dadurch werden die sogenannten Life Cycle Costs deutlich minimiert.

Eine weitere Weiterbildung der Erfindung ist darin zu sehen, dass das Filter wenigstens zwei gegeneinander angeordnete, sich in einer ersten, insbesondere horizontalen Richtung überlappende und senkrecht zur ersten Richtung, also insbesondere vertikal voneinander beabstandete und somit einen Spalt vorgegebener Größe bildende Kulissen umfasst. Derart ausgebildete Filter werden auch als Kulissenfilter bezeichnet. Sie weisen gegeneinander ausgerichtete bzw. gegeneinander verlaufende Kulissen auf, die einen Spalt vorgegebener Größe zwischen den Kulissen aufweisen. Es sind zumindest zwei Kulissen, weitergebildet genau zwei Kulissen vorgesehen, beispielsweise eine erste, obere Kulisse, die deckseitig angeordnet ist und sich in Richtung eines Bodens des Grauwasserbehälters - also von oben nach unten - erstreckt und eine zweite, untere Kulisse, die bodenseitig angeordnet ist und sich in Richtung der Decke des Grauwasserbehälters - also von unten nach oben - erstreckt und sich insbesondere in vertikaler Richtung überlappen. Der Spalt weist seine vorgegebene Breite in horizontaler Richtung auf.

Weitergebildet ist der Füllstandsensor in einem vorgegebenen Abstand in vertikaler Richtung unterhalb einer Unterseite der oberen Kulisse und damit auch unterhalb der Oberseite der unteren Kulisse angeordnet. Der Abstand bildet die oben genannte Reserve zur Aufnahme zusätzlichen Feststoffs ab.

Die untere Kulisse oder die unteren Kulissen können auch als bewegliche Schieber ausgebildet sein.

Weitergebildet ist Boden des Gauwasserbehälters vom Einlassbereich zum Auslassbereich ansteigend.

Eine weitere Weiterbildung der Erfindung besteht darin, dass der Ablauf für gefiltertes Grauwasser, welcher insbesondere im Auslassbereich angeordnet ist, eine Öffnung zum Durchtritt von gefiltertem Grauwasser aufweist, die vom Boden des Grauwasserbehälters beabstandet angeordnet ist. Die Öffnung des Ablaufs ist somit gegenüber dem Boden des Grauwasserbehälters angehoben.

Beispielsweise weist der Ablauf ein Rohr auf, welches durch den Boden des Grauwasserbehälters geführt ist und in den Grauwasserbehälter hineinragt. Die Öffnung des Ablaufs ist dann entsprechend die im Grauwasserbehälter liegende Öffnung des Rohrs. Der über dem Boden erhöhte Abfluss hat den Vorteil, dass ausströmendes, aufbereitetes Grauwasser kein eventuell am Boden abgelagertes Sediment mitreißt. Der Ablauf für gefiltertes Grauwasser kann auch als Überlauf für den Grauwasserbehälter fungieren. Das Grauwasser strömt frei durch den Abfluss, insbesondere auf das Gleisbett. Optional ist stromabwärts des Ablaufs ein Ablassventil zur Regulierung des Durchflusses durch den Ablauf vorgesehen.

Eine weitere Weiterbildung der Erfindung ist darin zu sehen, dass das Filter eine permeable Membran, insbesondere ein Filtersieb, zur Filterung von Feststoffpartikeln vorgegebener Größe aus dem Grauwassers umfasst. Filterungen mittels permeabler Membran werden unter dem Begriff Membrantrennverfahren zusammengefasst.

Dabei ist ein zum Kulissenfilter zusätzliches Filtersieb denkbar, welches insbesondere über unterer Kulisse angeordnet ist. Aber auch eine anstelle des Kulissenfilters eingesetzte permeable Membran ist möglich.

Das Filter dient zur Filterung von Partikeln aus dem Grauwasser, welche Partikel größer als eine vorgegebene Mindestgröße sind. Das Filter ist entsprechend geeignet ausgestaltet, beispielsweise ist es als Sieb vorgegebener Maschenweite zum Abscheiden von Feststoffen vorgegebener Mindestgröße aus der Flüssigkeit ausgebildet.

Die Aufspaltung des Abwassers in einen Filterkuchen und ein flüssiges Filtrat mittels eines Filtermediums wird auch als Filtration bezeichnet. Dabei wird insbesondere in der Flüssigkeit mitgeführter Feststoff aus der Flüssigkeit heraus getrennt. Das Filtermedium, umgangssprachlich auch Filter genannt, hält dabei Feststoffe aus der Flüssigkeit zurück. Die feststofffreie Phase wird bei der Filtration von Flüssigkeiten als Filtrat bezeichnet. Der an der Oberfläche des Filtermediums, beispielsweise einem Sieb, zurückbleibende Feststoff heißt, wie oben bereits ausgeführt, Filterkuchen. Fällt dieser vom Filter ab und sammelt sich am Boden, wird er als Sediment oder einfach nur als Feststoff bezeichnet.

Weitergebildet kann der Grauwasserbehälter der Aufbereitungsvorrichtung zumindest einen Reinigungsabfluss aufweisen, welcher geeignet ausgebildet und insbesondere bodenseitig im Einlassbereich im Grauwasserbehälter angeordnet ist, um vom Filter abgeschiedenes Sediment aus dem Grauwasserbehälter abzuführen, insbesondere um es durch den Reinigungsabfluss aus dem Grauwasserbehälter abzusaugen. Reinigungsabflüsse können beidseitig des Filters, also insbesondere im Einlassbereich und im Auslassbereich des Grauwasserbehälters angeordnet sein. Diese können auch in dasselbe Abflussrohr münden.

Des Weiteren kann ein Frischwasserzulauf zur Zufuhr von Frischwasser, insbesondere deckenseitig, insbesondere im Auslassbereich angeordnet sein. Der Frischwasserzulauf kann zur Reinigung des Grauwasserbehälters dienen, beispielsweise um die Sedimente bei geöffnetem einlassbereichseitigem Reinigungsabfluss und gehobenen Schiebern des Kulissenfilters heraus zu spülen. Der Frischwasserzulauf kann als Düse ausgebildet sein, um auch die Seitenwände des Grauwasserbehälters und/oder das Filter zu reinigen. Dazu kann die Düse derart ausgebildet sein, einen Wasserstrahl ausstoßen, der unmittelbar auf die Seitenwände des Grauwasserbehälters und/oder das Filter trifft.

Gemäß einer weiteren Weiterbildung weist der Grauwasserbehälter wenigstens eine von außen verschließbare Reinigungsöffnung vorgegebener Größe zur manuellen Wartung zumindest des Einlassbereichs des Grauwasserbehälters auf. Die Reinigungsöffnung ist insbesondere von außen frei zugänglich. Dazu ist der Grauwasserbehälter so im Schienenfahrzeug angeordnet, dass Reinigungsöffnung frei zugänglich ist, so dass Grauwasserbehälter manuell gereinigt werden kann. Je nach Filtertyp kann sie geeignet zur manuellen Wartung eines Innenraums des Grauwasserbehälters ausgebildet und angeordnet sein. Sie kann seitlich an einer Stirnseite des Grauwasserbehälters angeordnet sein, insbesondere im Einlassbereich des Grauwasserbehälters.

Zusätzlich oder alternativ dazu ist die Reinigungsöffnung bodenseitig angeordnet. Dann kann sie zur Abfuhr von vom Filter abgeschiedenem Sediment aus dem Grauwasserbehälter geeignet ausgebildet und angeordnet sein, insbesondere im Einlassbereich des Grauwasserbehälters. Sie kann damit auch den Reinigungsabfluss ersetzen.

Zum Verschluss der Reinigungsöffnung umfasst die Aufbereitungsvorrichtung gemäß einer weiteren Weiterbildung der Erfindung einen verschiebbaren Bodenabschnitt, welcher so am Grauwasserbehälter angeordnet ist, dass er in einer eingeschobenen Position einen Teil des Bodens des Gauwasserbehälters bildet und die Reinigungsöffnung im Boden des Grauwasserbehälters verschließt und in einer ausgeschobenen Position die Reinigungsöffnung frei gibt.

Der Grauwasserbehälter kann weitergebildet Führungsschienen zur Führung des verschiebbaren Bodenabschnitts aufweisen, welche beispielsweise an Seitenwänden des Grauwasserbehälters angeordnet sein können. Die Führungsschienen dienen der Führung des verschiebbaren Bodenabschnitts bei einer Verschiebung des verschiebbaren Bodenabschnitts entlang der Führungsschienen, insbesondere parallel zum Boden des Grauwasserbehälters im Bereich des verschiebbaren Bodenabschnitts.

Eine weitere Weiterbildung ist darin zu sehen, dass der Grauwasserbehälter einen dem verschiebbaren Bodenabschnitt zugewandten, insbesondere elastischen und gegen eine zum Innenraum des Grauwasserbehälters weisenden Fläche des verschiebbaren Bodenabschnitts vorgespannten Abstreifer aufweist, der ausgebildet ist, Anhaftungen an dem verschiebbaren Bodenabschnitt, insbesondere an der nach innen in den Grauwasserbehälter weisenden Fläche des verschiebbaren Bodenabschnitts, bei einer Bewegung des verschiebbaren Bodenabschnitts aus der eingeschobenen Position in die ausgeschobene Position abzustreifen.

Zur bevorzugten wasserdichten Abdichtung des verschiebbaren Bodenabschnitts gegen den Grauwasserbehälter kann zwischen dem verschiebbaren Bodenabschnitt und dem Grauwasserbehälter wenigstens eine Dichtung vorgesehen sein, welche in der eingeschobenen Position gegen beide Bauteile vorgespannt ist.

Weitergebildet ist ein Auffangbehälter zur Aufnahme von vom Filter abgeschiedenem Sediment aus dem Grauwasserbehälter unterhalb der verschließbaren Reinigungsöffnung vorgesehen. Ausgefiltertes Sediment wird auch als Filterkuchen bezeichnet.

Die Erfindung lässt zahlreiche Ausführungsformen zu. Sie wird anhand der nachfolgenden Figur näher erläutert, in der ein Ausgestaltungsbeispiel dargestellt ist.

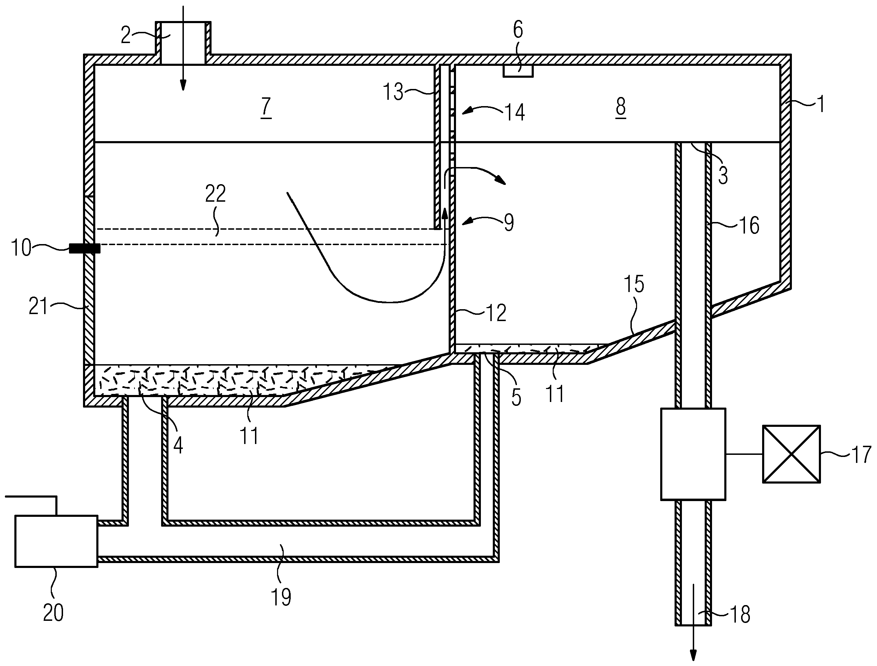

In der Figur ist eine erfindungsgemäße Aufbereitungsvorrichtung für Grauwasser schematisch im Längsschnitt dargestellt.

Ein Grauwasserbehälter 1 umfasst einen Grauwasserzulauf 2 in einem Einlassbereich 7, einen Ablauf 3 für gefiltertes Grauwasser in einem Auslassbereich 8, einen Filter 9 zur Filterung von Feststoff aus dem Grauwasser zwischen dem Grauwasserzulauf 2 und dem Ablauf 3 für gefiltertes Grauwasser und einen Füllstandsensor 10 im Einlassbereich 7.

Der Füllstandsensor 10 ist hier in Form eines Frequenzhub-Füllstandssensors als Grenzstandschalter ausgebildet und auf einer vorgegebenen Höhe über einem Boden 15 des Einlassbereichs 7 des Grauwasserbehälters 1 angeordnet, um einen vorgegebenen Grenzstand an Feststoff im Grauwasserbehälter 1 zu erkennen. Die Höhe des vorgegebenen Grenzstands an Feststoff im Grauwasserbehälter 1 entspricht dabei der Höhe des Füllstandsensors 10 über dem Boden 15 des Grauwasserbehälters 1. Der Feststoff wird vom Filter 9 aus dem Grauwasser gefiltert und zurückgehalten (Filterkuchen) und lagert sich am Boden ab und wird dann Sediment genannt. Der abgelagerte Feststoff wird hier mit dem Bezugszeichen 11 gekennzeichnet.

Der Ablauf 3 weist ein Rohr 16 auf, welches durch den Boden 15 des Grauwasserbehälters 1 geführt ist und in den Grauwasserbehälter 1 hineinragt. Er dient gleichzeitig als Überlauf. Die Ablauföffnung endet in diesem Ausgestaltungsbeispiel oberhalb des vorgegebenen Grenzstands an Feststoff im Grauwasserbehälter 1. Das Rohr 16 endet andererseits üblicherweise über den Gleisen für ein Schienenfahrzeug, auf welchen das gefilterte Grauwasser abgelassen wird. Hier weist es den Ausgang 18 auf. Alternativ kann das gefilterte Grauwasser auch einem Grauwasserverbraucher, beispielsweise einer Toilette des Schienenfahrzeugs als Spülwasser zugeführt werden. Das Rohr 16 stromabwärts des Ablaufs kann ein Ablassventil 17 zur Regulierung des Durchflusses an gefiltertem Grauwasser durch den Ablauf 3 aufweisen.

Als Filter 9 dient hier ein Kulissenfilter mit einer festen oberen Kulisse 13, die fest mit dem Grauwasserbehälter 1 verbunden und starr in dem Grauwasserbehälter 1 deckenseitig angeordnet ist und sich in Richtung des Bodens 15 des Grauwasserbehälters 1 erstreckt und mit einer festen unteren Kulisse 12, die hier ebenfalls fest mit dem Grauwasserbehälter 1 verbunden und starr in dem Grauwasserbehälter 1 bodenseitig angeordnet ist und sich in Richtung der Decke des Grauwasserbehälters 1 erstreckt.

Der Füllstandsensor 10 ist dabei auf einer vorgegebenen Höhe über einem Boden 15 des Einlassbereichs 7 des Grauwasserbehälters 1 angeordnet, die unterhalb einer Unterseite der oberen Kulisse 13 und oberhalb einer Oberseite der unteren Kulisse 12 liegt. Somit kann, wenn der Füllstandsensor 10 den vorgegebenen Grenzstand an Feststoff im Grauwasserbehälter 1 detektiert, in dem Grauwasserbehälter 1 noch zusätzlicher Feststoff abgelagert werden, ohne dass dieser das Filter 9 erreicht und somit ohne, dass das Filter 9 mit Feststoff zugesetzt wird. Dieser Bereich ist als Tagesreserve 22 markiert, da die übliche Höhendifferenz so festgelegt wird, dass diese die durchschnittliche Menge an täglich abgelagertem Feststoff abbildet.

Über der unteren Kulisse 12, ist hier zusätzlich eine permeable Membran 14 zur Filterung von Feststoffpartikeln vorgegebener Größe aus dem Grauwassers angeordnet. Diese ist hier mit der Oberseite der unteren Kulisse 12 und mit einer Decke des Grauwasserbehälters 1 verbunden und erstreckt sich auch über die gesamte Breite des Grauwasserbehälters 1 in die Zeichenebene hinein bzw. aus dieser heraus zwischen seinen Seitenwänden.

Sedimentablagerungen 11 finden sich hier sowohl im Einlassbereich 7, als auch im Auslassbereich 8. Die im Auslassbereich 8 ist jedoch deutlich geringer. Zur Abführung, insbesondere zur Absaugung des Sediments umfasst der Grauwasserbehälter 1 hier zwei bodenseitige Reinigungsabflüsse 4 und 5, einen im Einlassbereich 7 sowie einen im Auslassbereich 8. Gegebenenfalls kann auf den Reinigungsabfluss 5 im Auslassbereich 8 auch verzichtet werden. Beide münden in diesem Ausgestaltungsbeispiel in einer gemeinsamen Absaugleitung 19, die über ein weiteres Absperrorgan 20, beispielsweise einen Kugelhahn mit einer Absaugvorrichtung verbindbar sind.

Darüber hinaus ist stirnseitig im Einlassbereich 7 eine Reinigungsöffnung 21 vorgesehen, die von außen zu öffnen und verschließbar ist und eine zur manuellen Wartung und/oder gegebenenfalls manuellen Reinigung geeignete Größe aufweist.

Ferner ist eine Spüldüse als Frischwasserzulauf 6 zur Zufuhr von Frischwasser deckenseitig im Auslassbereich 8 angeordnet.

## Patentansprüche

1. Aufbereitungsvorrichtung für Grauwasser für ein Schienenfahrzeug, mit einem Grauwasserbehälter (1), einem Grauwasserzulauf (2), einem Ablauf (3) für gefiltertes Grauwasser, einem Filter (9) zwischen dem Grauwasserzulauf (2) und dem Ablauf (3) für gefiltertes Grauwasser und einem Füllstandsensor (10), **dadurch gekennzeichnet, dass** der Füllstandsensor (10) geeignet ausgebildet ist, einen Grenzstand an am Boden des Grauwasserbehälters (1) abgelagerten Feststoff (11) zu erkennen.

2. Aufbereitungsvorrichtung nach Anspruch 1,
**dadurch gekennzeichnet, dass**
der Füllstandsensor (10) geeignet ausgebildet ist, einen Grenzstand an Grauwasser im Grauwasserbehälter (1) zu erkennen.

3. Aufbereitungsvorrichtung nach einem der Ansprüche 1 oder 2,
**dadurch gekennzeichnet, dass**
der Füllstandsensor (10) als kapazitiver Frequenzhub-Füllstandsensor oder als Vibrationssensor ausgebildet ist.

4. Aufbereitungsvorrichtung nach einem der Ansprüche 1 bis 3,
**dadurch gekennzeichnet, dass**
der Grauwasserzulauf (2) in einem Einlassbereich (7) des Grauwasserbehälters (1) angeordnet ist, dass der Ablauf (3) für gefiltertes Grauwasser in einem Auslassbereich (8) des Grauwasserbehälters (1) angeordnet ist, dass das Filter (9) zwischen dem Einlassbereich und dem Auslassbereich angeordnet ist und, dass der Füllstandsensor (10) im Einlassbereich (7) geeignet angeordnet ist, zumindest einen Grenzstand an Feststoff (11) zumindest im Einlassbereich (7) des Grauwasserbehälters (1) zu erkennen.

5. Aufbereitungsvorrichtung nach einem der Ansprüche 1 bis 4,
**dadurch gekennzeichnet, dass**
der Grenzstand an Feststoff (11) so bemessen ist, dass der Grauwasserbehälter (1) eine Reserve zur Aufnahme zusätzlichen Feststoffs umfasst.

6. Aufbereitungsvorrichtung nach einem der Ansprüche 1 bis 5,
**dadurch gekennzeichnet, dass**
das Filter (9) wenigstens zwei gegeneinander angeordnete, sich in horizontaler Richtung überlappende und vertikal voneinander beabstandete Kulissen (12, 13) umfasst.

7. Aufbereitungsvorrichtung nach den Ansprüchen 5 und 6,
**dadurch gekennzeichnet, dass**
eine obere Kulisse (13) deckenseitig angeordnet ist und sich in Richtung eines Bodens (15) des Grauwasserbehälters (1) erstreckt, wobei eine untere Kulisse (12) bodenseitig angeordnet ist und sich in Richtung der Decke des Grauwasserbehälters (1) erstreckt, wobei der Füllstandsensor (10) in einem vorgegebenen Abstand unterhalb einer Unterseite der oberen Kulisse (13) angeordnet ist.

8. Aufbereitungsvorrichtung nach einem der Ansprüche 1 bis 7,
**dadurch gekennzeichnet, dass**
der Ablauf (3) für gefiltertes Grauwasser eine Öffnung zum Durchtritt von gefiltertem Grauwasser aufweist, die vom Boden (15) des Grauwasserbehälters (1) beabstandet angeordnet ist.

9. Aufbereitungsvorrichtung nach einem der Ansprüche 1 bis 8,
**dadurch gekennzeichnet, dass**
das Filter (9) eine permeable Membran (14) zur Filterung von Feststoffpartikeln vorgegebener Größe aus dem Grauwassers umfasst.

10. Aufbereitungsvorrichtung nach einem der Ansprüche 1 bis 9,
**dadurch gekennzeichnet, dass**
sie zumindest einen Reinigungsabfluss (4, 5) aufweist, welche zur Abführung von vom Filter (9) abgeschiedenem Sediment aus dem Grauwasserbehälter (1) geeignet ausgebildet und im Grauwasserbehälter (1) angeordnet ist.

11. Aufbereitungsvorrichtung nach einem der Ansprüche 1 bis 10,
**dadurch gekennzeichnet, dass**
der Grauwasserbehälter (1) wenigstens eine von außen verschließbare Reinigungsöffnung (21) zur manuellen Wartung des Grauwasserbehälters (1) aufweist.

12. Aufbereitungsvorrichtung nach Anspruch 11,
**dadurch gekennzeichnet, dass**
die Reinigungsöffnung (21) bodenseitig angeordnet ist.

13. Schienenfahrzeug mit wenigstens einer Aufbereitungsvorrichtung nach einem der Ansprüche 1 bis 12.

14. Schienenfahrzeug nach Anspruch 13,
**dadurch gekennzeichnet, dass**
der Füllstandsensor (10) ausgebildet ist, ein Grenzstandsignal in Abhängigkeit zumindest des Grenzstands an Feststoff (11) im Grauwasserbehälter (1) an eine Fahrzeugsteuerung des Schienenfahrzeugs auszugeben, welche ausgebildet ist, ein Wartungssignal an eine landseitige Einrichtung auszugeben.

15. Verfahren zum Betreiben einer Aufbereitungsvorrichtung nach einem der Ansprüche 1 bis 12,
**gekennzeichnet durch** folgende Verfahrensschritte:
- Erkennen eines Grenzstands an Feststoff (11) im Grauwasserbehälter (1);
- Übermitteln eines Wartungssignals an eine landseitige Einrichtung in Abhängigkeit des Grenzstands an Feststoff (11) im Grauwasserbehälter (1).

## Claims

1. Treatment apparatus for grey water for a rail vehicle, with a grey water container (1), a grey water feed line (2), an outlet line (3) for filtered grey water, a filter (9) between the grey water feed line (2) and the outlet line (3) for filtered grey water, and a filling level sensor (10), **characterized in that** the filling level sensor (10) is of suitable configuration for detecting a limit level of solid material (11) which is deposited on the bottom of the grey water container (1).

2. Treatment apparatus according to Claim 1, **characterized in that** the filling level sensor (10) is of suitable configuration for detecting a limit level of grey water in the grey water container (1).

3. Treatment apparatus according to either of Claims 1 and 2, **characterized in that** the filling level sensor (10) is configured as a capacitive frequency deviation filling level sensor or as a vibration sensor.

4. Treatment apparatus according to one of Claims 1 to 3, **characterized in that** the grey water feed line (2) is arranged in an inlet region (7) of the grey water container (1), **in that** the outlet line (3) for filtered grey water is arranged in an outlet region (8) of the grey water container (1), **in that** the filter (9) is arranged between the inlet region and the outlet region, and **in that** the filling level sensor (10) in the inlet region (7) is of suitable configuration for detecting at least one limit level of solid material (11) at least in the inlet region (7) of the grey water container (1).

5. Treatment apparatus according to one of Claims 1 to 4, **characterized in that** the limit level of solid material (11) is dimensioned in such a way that the grey water container (1) comprises a reserve for receiving additional solid material.

6. Treatment apparatus according to one of Claims 1 to 5, **characterized in that** the filter (9) comprises at least two slotted guides (12, 13) which are arranged against one another, overlap in the horizontal direction, and are spaced apart vertically from one another.

7. Treatment apparatus according to Claims 5 and 6, **characterized in that** an upper slotted guide (13) is arranged on the top side and extends in the direction of a bottom (15) of the grey water container (1), a lower slotted guide (12) being arranged on the bottom side and extending in the direction of the top of the grey water container (1), the filling level sensor (10) being arranged at a predefined spacing below an underside of the upper slotted guide (13).

8. Treatment apparatus according to one of Claims 1 to 7, **characterized in that** the outlet line (3) for filtered grey water has an opening for the passage of filtered grey water, which opening is arranged spaced apart from the bottom (15) of the grey water container (1).

9. Treatment apparatus according to one of Claims 1 to 8, **characterized in that** the filter (9) comprises a permeable membrane (14) for filtering solid material particles of a predefined size from the grey water.

10. Treatment apparatus according to one of Claims 1 to 9, **characterized in that** it has at least one cleaning outflow (4, 5) which is of suitable configuration for discharging sediment which is separated by the filter (9) from the grey water container (1) and is arranged in the grey water container (1).

11. Treatment apparatus according to one of Claims 1 to 10, **characterized in that** the grey water container (1) has at least one cleaning opening (21) which can be closed from the outside for the manual maintenance of the grey water container (1) .

12. Treatment apparatus according to Claim 11, **characterized in that** the cleaning opening (21) is arranged on the bottom side.

13. Rail vehicle having at least one treatment apparatus according to one of Claims 1 to 12.

14. Rail vehicle according to Claim 13, **characterized in that** the filling level sensor (10) is configured to output a limit level to a vehicle controller of the rail vehicle in a manner which is dependent on at least the limit level of solid material (11) in the grey water container (1), which vehicle controller is configured to output a maintenance signal to a land-side device.

15. Method for operating a treatment apparatus according to one of Claims 1 to 12, **characterized by** the following method steps:
- detecting of a limit level of solid material (11) in the grey water container (1);
- transmitting of a maintenance signal to a land-side device in a manner which is dependent on the limit level of solid material (11) in the grey water container (1).

## Revendications

1. Dispositif de traitement d'eaux grises d'un véhicule ferroviaire, comprenant un récipient (1) à eaux grises, une arrivée (2) d'eaux grises, une évacuation (3) d'eaux grises filtrées, un filtre (9) entre l'arrivée (2) d'eaux grises et l'évacuation des eaux grises filtrées et un capteur (10) de niveau, **caractérisé en ce que** le capteur (10) de niveau est constitué de manière à pouvoir détecter un niveau limite de matières (11) solides déposées au fond du récipient (1) à eaux grises.

2. Dispositif de traitement suivant la revendication 1,
**caractérisé en ce que**
le capteur (10) de niveau est constitué de manière appropriée pour détecter un niveau limite des eaux grises dans le récipient (1) à eaux grises.

3. Dispositif de traitement suivant l'une des revendications 1 ou 2,
**caractérisé en ce que**
le capteur (10) de niveau est constitué en capteur de niveau à écart de fréquence capacitif ou en capteur de vibrations.

4. Dispositif de traitement suivant l'une des revendications 1 à 3,
**caractérisé en ce que**
l'arrivée (2) d'eaux grises est disposée dans une partie (7) d'entrée du récipient (1) à eaux grises, **en ce que** l'évacuation (3) d'eaux grises filtrées est disposée dans une partie (8) de sortie du récipient (1) à eaux grises, **en ce que** le filtre (9) est disposé entre la partie d'entrée et la partie de sortie et **en ce que** le capteur (10) de niveau est disposé de manière appropriée dans la partie (7) d'entrée pour reconnaître au moins un niveau limite de matières (11) solides, au moins dans la partie (7) d'entrée du récipient (1) à eaux grises.

5. Dispositif de traitement suivant l'une des revendications 1 à 4,
**caractérisé en ce que**
le niveau limite de matières (11) solides est tel que le récipient (1) à eaux grises comprend une réserve de réception de matières solides supplémentaire.

6. Dispositif de traitement suivant l'une des revendications 1 à 5,
**caractérisé en ce que**
le filtre (9) comprend au moins deux coulisses (12, 13) disposées l'une en face de l'autre, se chevauchant dans la direction horizontale et à distance l'une de l'autre verticalement.

7. Dispositif de traitement suivant les revendications 5 et 6,
**caractérisé en ce que**
une coulisse (13) supérieure est disposée du côté du plafond et s'étend en direction d'un fond (15) du récipient (1) à eaux grises, tandis qu'une coulisse (12) inférieure est disposée du côté du fond et s'étend en direction du plafond du récipient (1) à eaux grises, le capteur (10) de niveau étant disposé à une distance donnée à l'avance, en dessous d'un côté inférieur de la coulisse (13) supérieure.

8. Dispositif de traitement suivant l'une des revendications 1 à 7,
**caractérisé en ce que**
l'évacuation (3) des eaux grises filtrées a une ouverture de passage des eaux grises filtrées, qui est disposée à distance du fond (15) du récipient(1) à eaux grises.

9. Dispositif de traitement suivant l'une des revendications 1 à 8,
**caractérisé en ce que**
le filtre (9) comprend une membrane (14) perméable pour filtrer des particules de matières solides de dimension donnée à l'avance des eaux grises.

10. Dispositif de traitement suivant l'une des revendications 1 à 9,
**caractérisé en ce qu'**
il a au moins une évacuation (4, 5) de nettoyage, qui est constituée de manière appropriée à l'évacuation de sédiments déposés par le filtre (9) du récipient (1) à eaux grises et qui est disposée dans le récipient (1) à eaux grises.

11. Dispositif de traitement suivant l'une des revendications 1 à 10,
**caractérisé en ce que**
le récipient (1) à eaux grises a, pour l'entretien manuel du récipient (1) à eaux grises, au moins une ouverture (21) de nettoyage pouvant être fermée de l'extérieur.

12. Dispositif de traitement suivant la revendication 11,
**caractérisé en ce que**
l'ouverture (21) de nettoyage est disposée du côté du fond.

13. Véhicule ferroviaire ayant au moins un dispositif de traitement suivant l'une des revendications 1 à 12.

14. Véhicule ferroviaire suivant la revendication 13,
**caractérisé en ce que**
le capteur (10) de niveau est constitué pour envoyer un signal de niveau limite, en fonction d'au moins le niveau limite de matières (11) solides dans le récipient (1) à eaux grises, à une commande du véhicule ferroviaire, constitué pour émettre un signal d'entretien à un dispositif à terre.

15. Procédé pour faire fonctionner un dispositif de traitement suivant l'une des revendications 1 à 12,
**caractérisé par** les stades de procédé suivants :
- détection d'un niveau limite de matières (11) solides dans le récipient (1) à eaux grises ;
- transmission d'un signal d'entretien à un dispositif à terre en fonction du niveau limite de matières (11) solides dans le récipient (1) à eaux grises.
